# EUROPEAN PATENT APPLICATION

(11) **EP 3 089 377 A1**
(43) Date of publication of application: **02.11.2016**
(21) Application number: 15189814.5
(22) Date of filing: 14.10.2015
(51) Int. Cl.: H04B 5/00, H02J 50/10, H02J 7/02, H02J 5/00

(54) **WIRELESS CHARGING DEVICE**

(30) Priority: 30.04.2015 TW 104113889; 02.06.2015 TW 104117866
(71) Applicant: JTOUCH Corporation, Taoyuan County 32063 (TW)
(72) Inventor: YEH, Yu-Chou, 32063 Jhongli City, Taoyuan County (TW); YEH, Tsung-Her, 32063 Jhongli City, Taoyuan County (TW); WU, Chen-Chi, 32063 Jhongli City, Taoyuan County (TW); YEH, Chun-Ting, 32063 Jhongli City, Taoyuan County (TW); HUANG, Hsueh-Jung, 32063 Jhongli City, Taoyuan County (TW); CHENG, Bo-Ruei, 32063 Jhongli City, Taoyuan County (TW); HU, Chih-Ming, 32063 Jhongli City, Taoyuan County (TW); TSUI, Chiu-Cheng, 32063 Jhongli City, Taoyuan County (TW); LIN, Hsiu-Hung, 32063 Jhongli City, Taoyuan County (TW)
(74) Representative: 2K Patentanwälte Blasberg Kewitz & Reichel

(57) **Abstract**

A wireless charging device (3) includes a main body (30), at least one transmitter coil assembly (31), at least one transmitter module (32), a shielding structure (33), a movable carrying unit (34) and a controlling unit (35). Each transmitter coil assembly (31) includes at least one antenna (312, 313) for emitting an electromagnetic wave with at least one specified frequency for wirelessly charging at least one power-receiving device (4, 4'). The movable carrying unit (34) is disposed within an accommodation space (301) of the main body (30) for carrying the at least one power-receiving device (4, 4'). According to a result of judging whether the at least one power-receiving device (4, 4') is introduced into or removed from the accommodation space (301) of the main body (30) through the movable carrying unit (34), the at least one transmitter module (32) is enabled or disabled by the controlling unit (35).

## Description

### FIELD OF THE INVENTION

The present invention relates to a wireless charging device, and more particularly to a wireless charging device capable of automatically and wirelessly charging a power-receiving device when the power-receiving device is loaded into a main body thereof and capable of suppressing the divergence of the electromagnetic wave.

### BACKGROUND OF THE INVENTION

Nowadays, various portable electronic devices such as mobile phones or tablet computers are widely used in our daily lives. For providing electric energy to the portable electronic device, a charging device is used to charge a built-in battery of the portable electronic device. Generally, the charging devices are classified into wired charging devices and wireless charging devices. Since the wireless charging device can be operated in various environments and not restricted by the power cable, the wired charging device is gradually replaced by the wireless charging device.

The wireless charging operation is also referred as an inductive charging operation or a non-contact charging operation. By the wireless charging technology, electric energy is transmitted from a power-providing device to a power-receiving device in a wireless transmission manner. Generally, three wireless power charging groups include WPC (Wireless Power Consortium) (QI), PMA (Power Matters Alliance) and A4WP (Alliance for Wireless Power). The WPC and A4WP standards are the mainstreams of the wireless charging technologies. The wireless charging technologies comprise a magnetic induction technology (low frequency) and a magnetic resonance technology (high frequency). The magnetic induction technology is only applied to short-distance energy transmission. The power conversion efficiency of the magnetic induction technology is higher. However, since the power-receiving device should be aligned with and attached on the power-providing device according to the magnetic induction technology, the power-providing device cannot charge plural power-receiving devices simultaneously. By the magnetic resonance technology, the energy transmission between a transmitter terminal and a receiver terminal is implemented at a specified resonant frequency. Consequently, the magnetic resonance technology can be applied to the longer-distance energy transmission when compared with the magnetic induction technology.

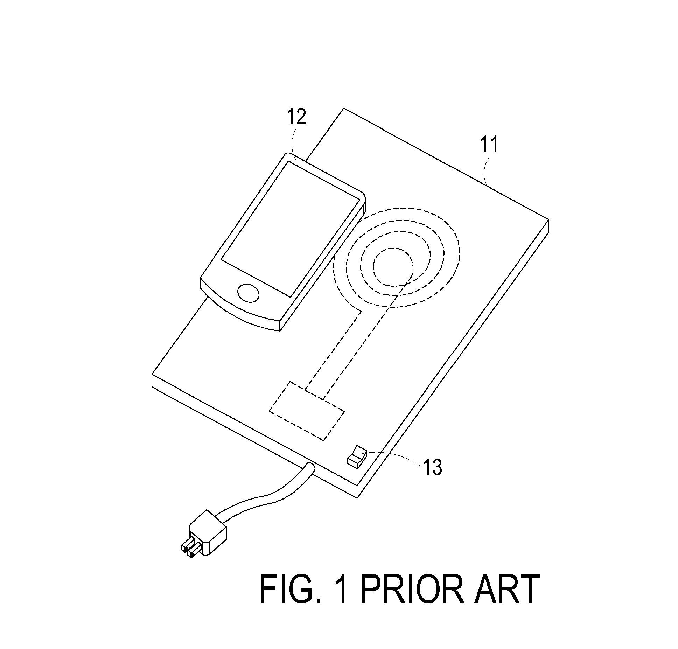

FIG. 1 schematically illustrates the use of a wireless charging device to wirelessly charge a power-receiving device according to the prior art. As shown in FIG. 1, the wireless charging device 11 transmits electric energy to the power-receiving device 12 in a wireless transmission manner. Generally, a coil assembly of the wireless charging device 11 is made of a multi-core copper wire. Moreover, after the copper wire is mounted on a rigid substrate which is made of ferrite magnetic oxide, the coil assembly is produced. The coil assembly is installed with a plate-shaped casing. In addition, the power-receiving device 12 has to be located at the outside of the wireless charging device 11 during the charging process. The wireless charging device 11 further comprises a switch element 13. The on/off statuses of the switch element 13 can be manually adjusted by the user. Consequently, the power-receiving device 12 is selectively charged or not charged by the wireless charging device 11. That is, the wireless charging task of the wireless charging device 11 is enabled when the switch element 13 is turned on. Since the power-receiving device 12 cannot be automatically charged by the wireless charging device 11 when the power-receiving device 12 is placed in the charging zone, the wireless charging device 11 is not user-friendly. Moreover, if the wireless charging task of the wireless charging device 11 is enabled when no power-receiving device 12 is placed in the charging zone, the energy loss increases. Moreover, the electromagnetic wave from the coil assembly of the wireless charging device 11 is radiated to everywhere of the surroundings. Consequently, the user is possibly hurt by the electromagnetic wave (especially the high energy electromagnetic wave for high-watt power-receiving device), and the charging efficiency of the wireless charging device 11 is usually insufficient.

In case that the wireless charging device 11 is placed within a vehicle body, the power-receiving device 12 on the wireless charging device 11 is in an open space. Moreover, while the vehicle is driven, the power-receiving device 12 may fall down because of the rocking condition of the vehicle body. Under this circumstance, the power-receiving device 12 is possibly damaged. Similarly, the electromagnetic wave from the coil assembly of the wireless charging device 11 is radiated to everywhere of the surroundings. Consequently, the user is possibly hurt by the electromagnetic wave, and the charging efficiency of the wireless charging device 11 is usually insufficient. Moreover, the current wireless charging devices are operated by different technologies. Consequently, the coupling frequencies of the coil assemblies and the transmitter terminal circuits are usually different. Under this circumstance, the components of the wireless charging devices and the components of the power-receiving devices are incompatible. Due to the incompatibility, the coil assemblies and the circuitry components of different wireless charging devices are usually different. Consequently, the wireless charging device is customized according to the type of the portable electronic device. Under this circumstance, the applications of the wireless charging device are restricted. Moreover, the wireless charging device is unable to wirelessly charge plural power-receiving devices which are designed according to different wireless charging technologies.

### SUMMARY OF THE INVENTION

An object of the present invention provides a wireless charging device capable of automatically and wirelessly charging a power-receiving device when the power-receiving device is loaded into a main body of the wireless charging device. Moreover, the wireless charging device is capable of suppressing the divergence of the electromagnetic wave in order to reduce the electromagnetic radiation injury. Moreover, since the electromagnetic wave is converged to a charging zone to charge one or more power-receiving devices in a non-contact manner, the charging efficiency of the wireless charging device is enhanced.

Another object of the present invention provides a wireless charging device suitably used in a vehicle body. The wireless charging device is capable of emitting an electromagnetic wave with one or more frequencies so as to wirelessly charge one or more power-receiving devices at the same time or at different times. Moreover, the wireless charging device has an accommodation space for accommodating the one or more power-receiving devices. Consequently, the one or more power-receiving devices within the accommodation space can be wirelessly charged by the wireless charging device at the same time or at different times. Under this circumstance, the wireless charging application and convenience are enhanced.

A further object of the present invention provides a wireless charging device capable of wirelessly charging one or more power-receiving devices at the same time or at different times according to magnetic resonance or magnetic induction.

In accordance with an aspect of the present invention, there is provided a wireless charging device for wirelessly charging at least one power-receiving device. The wireless charging device includes a main body, at least one transmitter coil assembly, at least one transmitter module, a shielding structure, a movable carrying unit and a controlling unit. The main body includes an accommodation space and an entrance. The at least one transmitter coil assembly is disposed within the main body. Each transmitter coil assembly includes at least one antenna for emitting an electromagnetic wave with at least one specified frequency for wirelessly charging the at least one power-receiving device. The at least one transmitter module is electrically connected with the corresponding transmitter coil assembly and a power source. The transmitter module receives an electric energy from the power source and provides an AC signal to the corresponding transmitter coil assembly. The shielding structure is attached on an outer surface of the main body or disposed within the main body. The shielding structure shields at least a part of the antenna of the transmitter coil assembly so as to block divergence of the electromagnetic wave toward an outer side of the main body. The movable carrying unit is disposed within the accommodation space of the main body for carrying the at least one power-receiving device. The at least one power-receiving device is selectively introduced into or removed from the accommodation space of the main body through the movable carrying unit. The controlling unit is electrically connected with the at least one transmitter module. According to a result of judging whether the at least one power-receiving device is introduced into or removed from the accommodation space of the main body through the movable carrying unit, the at least one transmitter module is enabled or disabled by the controlling unit.

The above contents of the present invention will become more readily apparent to those ordinarily skilled in the art after reviewing the following detailed description and accompanying drawings, in which:

### BRIEF DESCRIPTION OF THE DRAWINGS

FIG. 1 schematically illustrates the use of a wireless charging device to wirelessly charge a power-receiving device according to the prior art;
FIG. 2 is a schematic perspective view illustrating the appearance of a wireless charging device according to an embodiment of the present invention;
FIG. 3 schematically illustrates the architecture of the wireless charging device of the wireless charging system according to the embodiment of the present invention;
FIG. 4 schematically illustrates the architecture of the power-receiving device of the wireless charging system according to the embodiment of the present invention;
FIG. 5A is a schematic cross-sectional view illustrating the wall part of the main body of the wireless charging device as shown in FIG. 3;
FIG. 5B schematically illustrates the relationship between the transmitter coil assembly and the shielding structure of the wireless charging device of FIG. 5A;
FIG. 6A is a schematic cross-sectional view illustrating a variant example of the wall part of the wireless charging device;
FIG. 6B schematically illustrates the relationship between the transmitter coil assembly and the shielding structure of the wireless charging device of FIG. 6A;
FIG. 7A is a schematic cross-sectional view illustrating another variant example of the lateral wall of the wireless charging device;
FIG. 7B schematically illustrates the relationship between the transmitter coil assembly and the shielding structure of the wireless charging device of FIG. 7A;
FIG. 8 schematically illustrates an example of the shielding structure of the wireless charging device as shown in FIG. 2;
FIG. 9 is a schematic circuit block diagram illustrating a transmitter module of the wireless charging device of FIG. 3;
FIG. 10 is a schematic circuit block diagram illustrating a receiver module of the power-receiving device of the wireless charging system according to the embodiment of the present invention;
FIG. 11 is a schematic perspective view illustrating the appearance of a power-receiving device of the wireless charging system according to the embodiment of the present invention;
FIG. 12 is a schematic circuit block diagram illustrating the architecture of the wireless charging system according to another embodiment of the present invention;
FIG. 13 schematically illustrates a first application example of the wireless charging device of the present invention;
FIG. 14 schematically illustrates a second application example of the wireless charging device of the present invention;
FIG. 15 schematically illustrates a third application example of the wireless charging device of the present invention; and
FIG. 16 schematically illustrates a fourth application example of the wireless charging device of the present invention.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

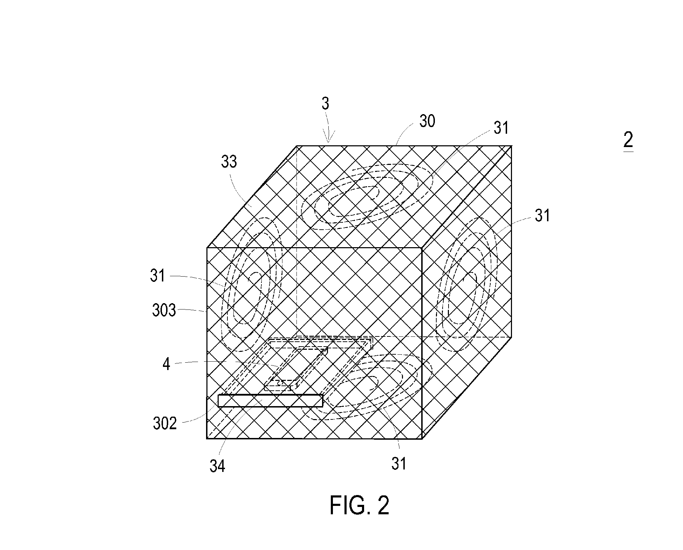

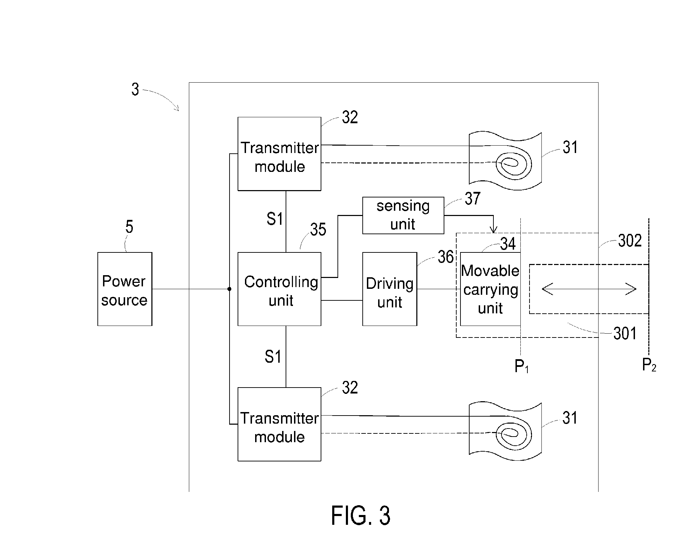

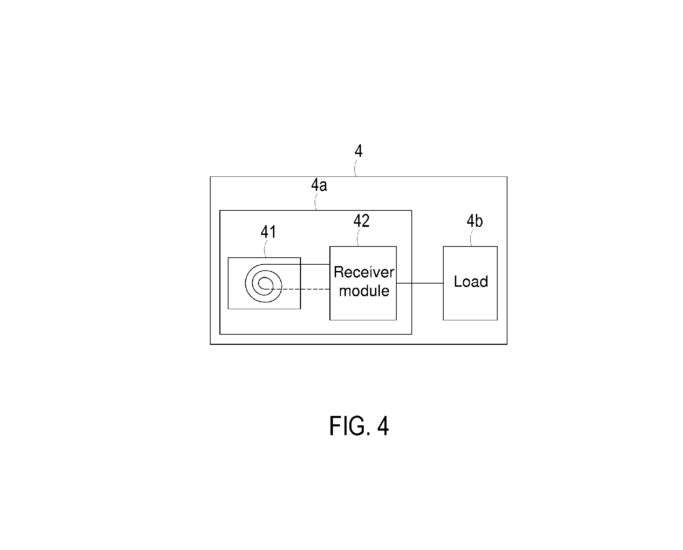

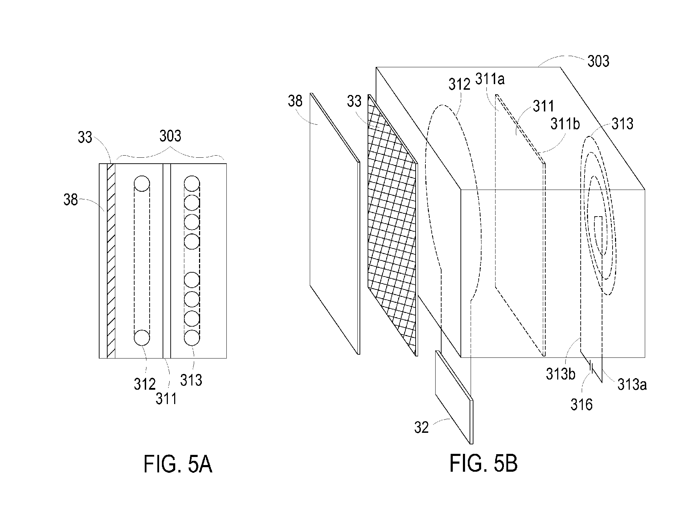

FIG. 2 is a schematic perspective view illustrating the appearance of a wireless charging device according to an embodiment of the present invention. FIG. 3 schematically illustrates the architecture of the wireless charging device of the wireless charging system according to the embodiment of the present invention. FIG. 4 schematically illustrates the architecture of the power-receiving device of the wireless charging system according to the embodiment of the present invention. FIG. 5A is a schematic cross-sectional view illustrating the wall part of the main body of the wireless charging device as shown in FIG. 3. FIG. 5B schematically illustrates the relationship between the transmitter coil assembly and the shielding structure of the wireless charging device of FIG. 5A.

Please refer to FIGS. 2, 3, 4, 5A and 5B. The wireless charging system 2 comprises a wireless charging device 3 and at least one power-receiving device 4. The wireless charging device 3 is connected with a power source 5. For example, the power source 5 is an AC utility power source, an external battery or a built-in battery. The wireless charging device 3 emits an electromagnetic wave with a specified frequency (i.e., a single frequency) or a wideband frequency (e.g., plural frequencies). For example, the frequency of the electromagnetic wave is in the range between 60Hz and 300GHz. Consequently, by a magnetic induction technology (low frequency) or a magnetic resonance technology (high frequency), the wireless charging device 3 can wirelessly charge one or more power-receiving devices 4 through the electromagnetic wave with identical or different frequencies. For example, the power-receiving device 4 is a mobile phone, a tablet computer or an electrical product.

In this embodiment, the wireless charging device 3 comprises a main body 30, at least one transmitter coil assembly 31, at least one transmitter module 32, a shielding structure 33, a movable carrying unit 34 and a controlling unit 35. The main body 30 is a casing comprising an accommodation space 301, an entrance 302 and a wall part 303. The accommodation space 301 of the main body 30 is used as a charging zone. Moreover, at least one power-receiving device 4 to be wirelessly charged can be accommodated within the accommodation space 301. The at least one transmitter coil assembly 31 is disposed within the wall part 303 of the main body 30, and electrically connected with the corresponding transmitter module 32. The transmitter coil assembly 31 is used as a transmitter terminal of the wireless charging device 3. The transmitter module 32 is electrically connected between the power source 5 and the corresponding transmitter coil assembly 31. Moreover, the transmitter module 32 receives the electric energy from the power source 5 and generates an AC signal to the corresponding transmitter coil assembly 31. The shielding structure 33 is attached on an outer surface of the wall part 303 of the main body 30. The shielding structure 33 is used for partially or completely shielding the corresponding transmitter coil assembly 31 and blocking the electromagnetic wave divergence. Consequently, the electromagnetic wave is converged to the accommodation space 301 of the main body 30 so as to wirelessly charge the at least one power-receiving device 4 within the accommodation space 301. The movable carrying unit 34 is disposed within the accommodation space 301 of the main body 30. The movable carrying unit 34 is used for carrying the at least one power-receiving device 4 and moving the at least one power-receiving device 4 to a first position PI or a second position P2. That is, as the movable carrying unit 34 is moved, the at least one power-receiving device 4 is introduced into the accommodation space 301 of the main body 30 (i.e., moved to the first position P1) or removed from the accommodation space 301 of the main body 30 (i.e., moved to the second position P2). The controlling unit 35 is electrically connected with the at least one transmitter module 32. According to the result of judging whether the at least one power-receiving device 4 is introduced into the accommodation space 301 of the main body 30 through the movable carrying unit 34, the controlling unit 35 controls the operations of the at least one transmitter module 32. In this embodiment, the wireless charging device 3 further comprises a driving unit 36. The driving unit 36 is disposed within the main body 30, and electrically connected with the movable carrying unit 34 and the controlling unit 35. Under control of the controlling unit 35, the driving unit 36 can drive movement of the movable carrying unit 34. Consequently, the movable carrying unit 34 is automatically introduced into the accommodation space 301 of the main body 30 (i.e., moved to the first position P1) or removed from the accommodation space 301 of the main body 30 (i.e., moved to the second position P2). In some other embodiments, the driving unit 36 is omitted. Under this circumstance, the movable carrying unit 34 is introduced into the accommodation space 301 of the main body 30 (i.e., moved to the first position P1) or removed from the accommodation space 301 of the main body 30 (i.e., moved to the second position P2) according to a pushing action or a pulling action of the user.

In this embodiment, the wireless charging device 3 further comprises a sensing unit 37. The sensing unit 37 is electrically connected with the controlling unit 35 for sensing whether the at least one power-receiving device 4 is carried by the movable carrying unit 34 and the movable carrying unit 34 is introduced into the accommodation space 301 of the main body 30 (i.e., moved to the first position P1) and generating a corresponding sensing signal to the controlling unit 35. If the sensing unit 37 detects that the at least one power-receiving device 4 is carried by the movable carrying unit 34 and the movable carrying unit 34 is introduced into the accommodation space 301 of the main body 30 (i.e., moved to the first position P1), the sensing signal in an enabling state is issued from the sensing unit 37 to the controlling unit 35. According to the sensing signal in the enabling state, the controlling unit 35 generates a corresponding control signal S1 to the transmitter module 32 in order to enable the transmitter module 32. Under this circumstance, the transmitter coil assembly 31 of the wireless charging device 3 emits the electromagnetic wave for automatically and wirelessly charge the at least one power-receiving device 4. On the other hand, if no power-receiving device is carried by the movable carrying unit 34, or if the movable carrying unit 34 is not introduced into the accommodation space 301 of the main body 30 (i.e., not moved to the first position P1), or if the at least one power-receiving device 4 carried by the movable carrying unit 34 is removed from the accommodation space 301 of the main body 30 (i.e., moved to the second position P2), the sensing signal in a disabling state is issued from the sensing unit 37 to the controlling unit 35. According to the sensing signal in the disabling state, the controlling unit 35 generates a corresponding control signal S1 to the transmitter module 32 in order to disable the transmitter module 32. Under this circumstance, the transmitter coil assembly 31 of the wireless charging device 3 does not emit the electromagnetic wave. Since the wireless charging is not operated at this moment, the power consumption is reduced. An example of the sensing unit 37 includes but is not limited to a mechanical triggering sensor, an optical sensor or a pressure sensor.

In an embodiment, the wireless charging device 3 comprises a transmitter coil assembly 31 and a transmitter module 32. Consequently, the wireless charging device 3 emits the electromagnetic wave with a specified frequency in order to wirelessly charge the power-receiving device 4. In another embodiment, the wireless charging device 3 comprises plural transmitter coil assemblies 31 and plural transmitter modules 32. The transmitter coil assemblies 31 are electrically connected with the corresponding transmitter modules 32. Consequently, the wireless charging device 3 emits the electromagnetic wave with the specified frequency or the plural frequencies in order to wirelessly charge one or plural power-receiving devices 4 at the same time or at different times.

In this embodiment, the at least one transmitter coil assembly 31 is flexible, and disposed within the wall part 303 of the main body 30. The transmitter coil assembly 31 comprises a flexible substrate 311, an oscillation starting antenna 312 and a resonant antenna 313. The oscillation starting antenna 312 and the resonant antenna 313 are disposed on two opposite surfaces of the flexible substrate 311. In particular, the oscillation starting antenna 312 is disposed on a first surface 311a of the flexible substrate 311, and the resonant antenna 313 is disposed on a second surface 311b of the flexible substrate 311. Moreover, one or more capacitors 316 are connected between a first end 313a and a second end 313b of the resonant antenna 313. The two ends of the oscillation starting antenna 312 are connected with the transmitter module 32. When an AC signal from the transmitter module 32 is transmitted to the oscillation starting antenna 312 of the transmitter coil assembly 31, a coupling effect of the oscillation starting antenna 312 and the resonant antenna 313 occurs. Consequently, the electromagnetic wave with the specified frequency and a receiver coil assembly 41 of a wireless receiving unit 4a of the corresponding power-receiving device 4 result in a coupling effect. In response to the coupling effect, the electric energy received by the receiver coil assembly 41 is further converted into an output voltage by a receiver module 42. The output voltage is transmitted to a load 4b (see FIG. 4) so as to wirelessly charge the power-receiving device 4.

In an embodiment as shown in FIGS. 5A and 5B, the wireless charging device 3 further comprises a protective layer 38. The protective layer 38 is attached on at least a part of an outer surface of the shielding structure 33 in order to protect the shielding structure 33. For example, the protective layer 38 is made of protective paint. An example of the protective paint includes but is not limited to epoxy resin, acrylic silicone, polyurethane rubber, vinyl acetate-ethylene copolymer gel, polyimide gel, rubbery gel, polyolefin gel, moisture curable polyurethane gel or silicone.

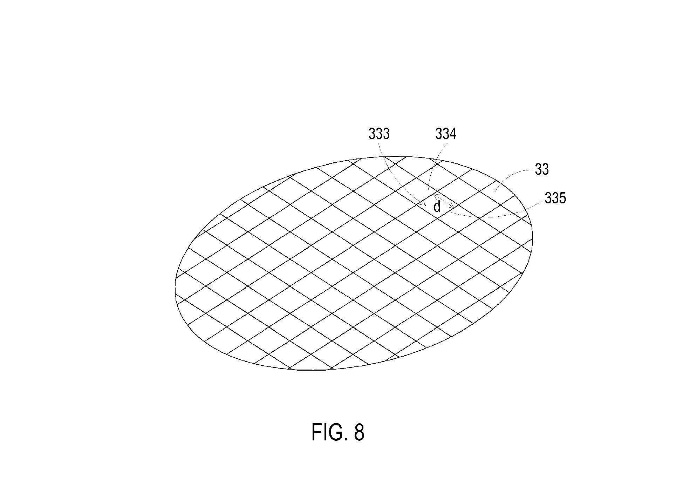

Please refer to FIGS. 2, 5A and 5B. The resonant antenna 313, the flexible substrate 311, the oscillation starting antenna 312, the shielding structure 33 and the protective layer 38 of the wireless charging device 3 are sequentially arranged in the direction from the accommodation space 301 of the main body 30 to the wall part 303. In other words, the transmitter coil assembly 31 is disposed within the wall part 303. The resonant antenna 313 is located near the accommodation space 301. The flexible substrate 311 is arranged between the resonant antenna 313 and the oscillation starting antenna 312. The oscillation starting antenna 312 is located near the outer surface of the wall part 303, and arranged between the resonant antenna 313 and the shielding structure 33. The shielding structure 33 is attached on an outer surface of the wall part 303 for at least partially shielding the resonant antenna 313 and the oscillation starting antenna 312 of the transmitter coil assembly 31. FIG. 8 schematically illustrates an example of the shielding structure of the wireless charging device as shown in FIG. 2. In this embodiment, the shielding structure 33 is a metal mesh for blocking the divergence of the electromagnetic wave with a higher frequency (e.g., the frequency higher than 6 MHz). The metal mesh is made of metallic material or metallic composite material selected from copper, gold, silver, aluminum, tungsten, chromium, titanium, indium, tin, nickel, iron, or a combination thereof. The pattern of the metal mesh comprises plural mesh units 333. Every two adjacent metal lines 334 and 335 of the mesh unit 333 that are not crisscrossed with each other are separated by a distance d. The distance d is shorter than a wavelength of the electromagnetic wave from the transmitter coil assembly 31. In some other embodiments, the shielding structure 33 is a magnetically-permeable film for blocking the divergence of the electromagnetic wave with a lower frequency (e.g., in the range between 60Hz and 20MHz). The magnetically-permeable film is made of soft magnetic material. Preferably but not exclusively, the soft magnetic material is a mixture of ferrite, zinc-nickel ferrite, zinc-manganese ferrite or iron-silicon-aluminum alloy and adhesive material. In another embodiment, the shielding structure 33 is a composite film for blocking the divergence of the electromagnetic wave with wideband frequency (e.g., in the range between 60Hz and 300GHz). For example, the composite film is a combination of a metal mesh and a magnetically-permeable film.

In some embodiments, a first adhesive layer and a second adhesive layer (not shown) are disposed on the first surface 311a and the second surface 311b of the flexible substrate 311, respectively. The oscillation starting antenna 312 and the resonant antenna 313 are made of electrically-conductive material. Moreover, the oscillation starting antenna 312 and the resonant antenna 313 are respectively fixed on the first surface 311a and the second surface 311b of the flexible substrate 311 through the corresponding adhesive layers. Each of the first adhesive layer and the second adhesive layer is made of light curable adhesive material, thermally curable adhesive material or any other appropriate curable adhesive material (e.g., vinyl acetate-ethylene copolymer gel, polyimide gel, rubbery gel, polyolefin gel or moisture curable polyurethane gel). In some other embodiments, the adhesive layer contains curable adhesive material and magnetic material. Preferably but not exclusively, the magnetic material is ferromagnetic powder. Alternatively, in some other embodiments, the flexible substrate 311 is replaced by the adhesive layers.

Preferably but not exclusively, the flexible substrate 311 is made of polyethylene terephthalate (PET), thin glass, polyethylennaphthalat (PEN), polyethersulfone (PES), polymethylmethacrylate (PMMA), polyimide (PI) or polycarbonate (PC). In some embodiments, the oscillation starting antenna 312 and the resonant antenna 313 are single-loop antennas or multi-loop antennas. Moreover, the oscillation starting antenna 312 and the resonant antenna 313 have circular shapes, elliptic shapes or rectangular shapes. The electrically-conductive material of the oscillation starting antenna 312 and the resonant antenna 313 includes but is not limited to silver (Ag), copper (Cu), gold (Au), aluminum (Al), tin (Sn) or graphene.

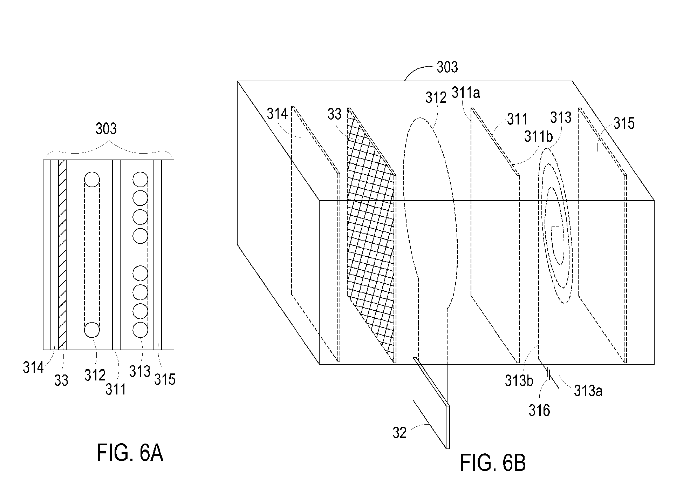

FIG. 6A is a schematic cross-sectional view illustrating a variant example of the wall part of the wireless charging device. FIG. 6B schematically illustrates the relationship between the transmitter coil assembly and the shielding structure of the wireless charging device of FIG. 6A. As shown in FIGS. 6A and 6B, the transmitter coil assembly 31 comprises a flexible substrate 311, an oscillation starting antenna 312, a resonant antenna 313, a first protective layer 314 and a second protective layer 315.

The oscillation starting antenna 312 and the resonant antenna 313 are covered by the first protective layer 314 and the second protective layer 315, respectively. That is, the first protective layer 314 and the second protective layer 315 are located at the outer sides of the oscillation starting antenna 312 and the resonant antenna 313, respectively.

In this embodiment, the shielding structure 34 is disposed within the wall part 303 of the main body 30, and arranged between the oscillation starting antenna 312 and the first protective layer 314.

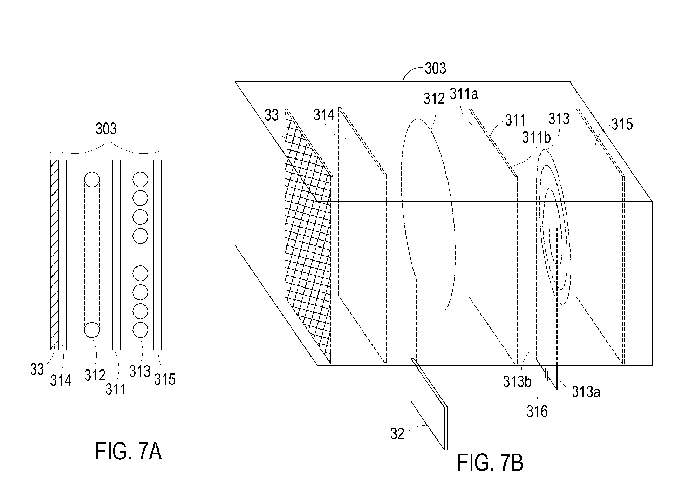

FIG. 7A is a schematic cross-sectional view illustrating another variant example of the lateral wall of the wireless charging device. FIG. 7B schematically illustrates the relationship between the transmitter coil assembly and the shielding structure of the wireless charging device of FIG. 7A. In comparison with FIGS. 6A and 6B, the shielding structure 33 is disposed within the wall part 303 of the main body 30, and located at the outer side of the first protective layer 314. The materials of the first protective layer 314 and the second protective layer 315 are identical to the material of the protective layer 38, and are not redundantly described herein.

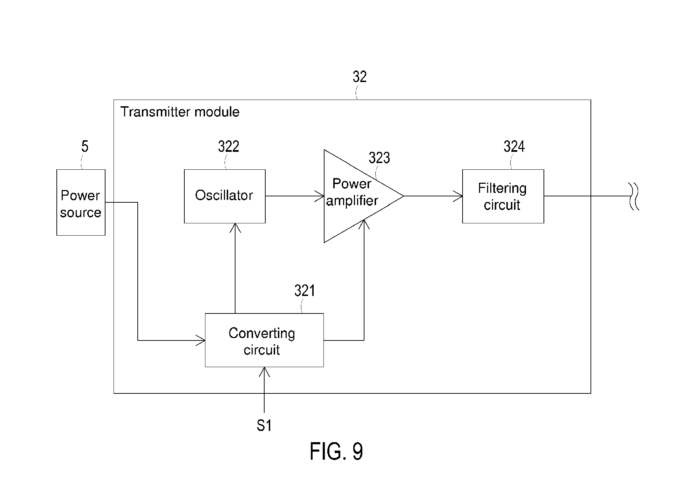

FIG. 9 is a schematic circuit block diagram illustrating a transmitter module of the wireless charging device of FIG. 3. In an embodiment, the wireless charging device 3 comprises one or plural transmitter modules 32. Each transmitter module 32 is electrically connected with the corresponding transmitter coil assembly 31. Moreover, each transmitter module 32 comprises a converting circuit 321, an oscillator 322, a power amplifier 323 and a filtering circuit 324. The input end of the converting circuit 321 is electrically connected with the power source 5. The output end of the converting circuit 321 is electrically connected with the oscillator 322 and the power amplifier 323. The converting circuit 321 is further electrically connected with the controlling unit 35 to receive the control signal S1 from the controlling unit 35. The converting circuit 321 is enabled or disabled under control of the controlling unit 35.

When the converting circuit 321 is enabled, the converting circuit 321 converts the electric energy from the power source 5 and provides the regulated voltage to the oscillator 322 and the power amplifier 323. For example, the converting circuit 321 comprises a DC-to-DC converter, an AC-to-AC converter and/or a DC-to-AC convertor.

The oscillator 322 is used for adjustably outputting an AC signal with a specified frequency. The AC signal with the specified frequency is amplified by the power amplifier 323. The resonant wave and the undesired frequency of the AC signal are filtered by the filtering circuit 324. The filtered AC signal is transmitted to the oscillation starting antenna 312 of the transmitter coil assembly 31.

Please refer to FIGS. 2 and 4. In this embodiment, each power-receiving device 4 comprises the wireless receiving unit 4a and the load 4b. The wireless receiving unit 4a and the load 4b are separate components or integrated into a single component. For example, the wireless receiving unit 4a is a wireless receiver pad, and the load 4b is a mobile phone without the function of being wirelessly charged. However, after the wireless receiver pad and the mobile phone are electrically connected with each other, the mobile phone can be wireless charged. Alternatively, in another embodiment, the wireless receiving unit 4a is disposed within a casing of the load 4b (e.g., the mobile phone).

The wireless receiving unit 4a of each power-receiving device 4 comprises the receiver coil assembly 41 and the receiver module 42. Like the transmitter coil assembly 31, the receiver coil assembly 41 comprises a flexible substrate, an oscillation starting antenna and a resonant antenna. Moreover, one or more capacitors 3 are connected between two ends of the resonant antenna. The structures, materials and functions of the flexible substrate, the oscillation starting antenna and the resonant antenna of the receiver coil assembly 41 are similar to those of the flexible substrate, the oscillation starting antenna and the resonant antenna of the transmitter coil assembly 31 as shown in FIGS. 5A and 5B, and are not redundantly described herein. In another embodiment, the receiver coil assembly 41 comprises a flexible substrate, an oscillation starting antenna, a resonant antenna, a first protective layer and a second protective layer. The structure and material of the receiver coil assembly 41 are similar to those of the transmitter coil assembly 31 as shown in FIGS. 6A, 6B, 7A and 7B, and are not redundantly described herein. Due to the coupling effect between the receiver coil assembly 41 and the transmitter coil assembly 31, the electric energy from the transmitter coil assembly 31 of the wireless charging device 3 can be received by the receiver coil assembly 41 according to magnetic resonance or magnetic induction. In case that the power-receiving device 4 is loaded into the accommodation space 301 of the wireless charging device 3, the wireless charging device 3 is automatically enabled. Consequently, if a higher frequency (e.g., 6.78MHz) of the electromagnetic wave emitted by the transmitter coil assembly 31 of the wireless charging device 3 and the frequency of the receiver coil assembly 41 of the power-receiving device 4 are identical, the electric energy can be transmitted from the transmitter coil assembly 31 of the wireless charging device 3 to the receiver coil assembly 41 of the wireless receiving unit 4a according to magnetic resonance. In another embodiment, when the wireless charging device 3 is automatically enabled, if a lower frequency (e.g., 100KHz) of the electromagnetic wave emitted by the transmitter coil assembly 31 of the wireless charging device 3 and the frequency of the receiver coil assembly 41 of the power-receiving device 4 are identical, the electric energy can be transmitted from the transmitter coil assembly 31 of the wireless charging device 3 to the receiver coil assembly 41 of the wireless receiving unit 4a according to magnetic induction. Since the shielding structure 33 can block the divergence of the electromagnetic wave which is emitted by the transmitter coil assembly 31, the electromagnetic wave is converged to the accommodation space 301. Under this circumstance, the charging efficiency is enhanced.

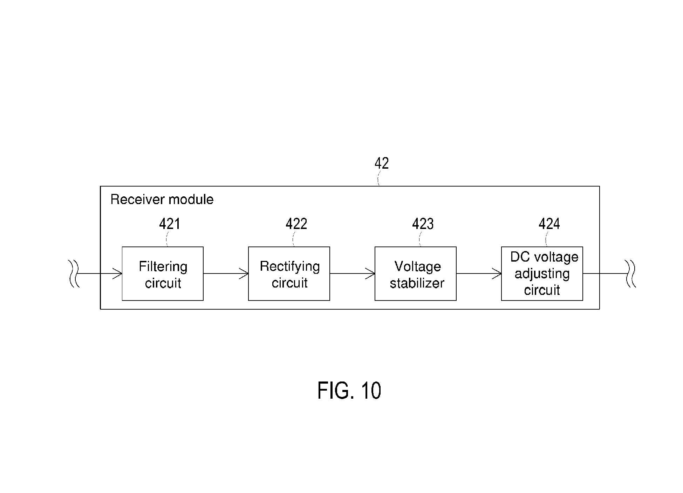

FIG. 10 is a schematic circuit block diagram illustrating a receiver module of the power-receiving device of the wireless charging system according to the embodiment of the present invention. Please refer to FIGS. 2, 4 and 10. The wireless receiving unit 4a comprises at least one receiver module 42. Each receiver module 42 comprises a filtering circuit 421, a rectifying circuit 422, a voltage stabilizer 423 and a DC voltage adjusting circuit 424. The filtering circuit 421 is electrically connected with the resonant antenna of the receiver coil assembly 41. The resonant wave of the AC signal from the receiver coil assembly 41 is filtered by the filtering circuit 421. The rectifying circuit 422 is electrically connected with the filtering circuit 421 and the voltage stabilizer 423 for converting the AC signal into a rectified DC voltage. The voltage stabilizer 423 is electrically connected with the rectifying circuit 422 and the DC voltage adjusting circuit 424 for stabilizing the rectified DC voltage to a stabilized DC voltage with a rated voltage value. The DC voltage adjusting circuit 424 is electrically connected with the voltage stabilizer 423 and the load 4b for adjusting (e.g., increasing) the stabilized DC voltage to a regulated DC voltage. The regulated DC voltage is provided to the load 4b to charge the load 4b (e.g., the battery of the mobile phone).

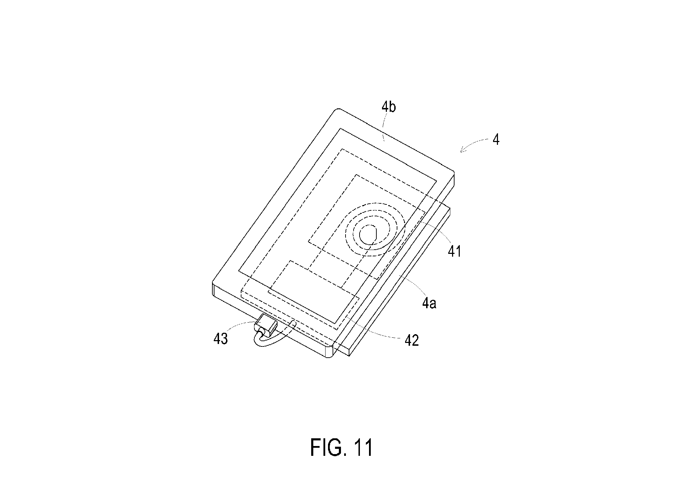

FIG. 11 is a schematic perspective view illustrating the appearance of a power-receiving device of the wireless charging system according to the embodiment of the present invention. Please refer to FIGS. 2, 4 and 11. The power-receiving device 4 comprises the wireless receiving unit 4a and the load 4b. In this embodiment, the wireless receiving unit 4a of the power-receiving device 4 is a wireless receiver pad, and the load 4b is a mobile phone without the function of being wirelessly charged. When a connector 43 of the wireless receiving unit 4a (i.e., the wireless receiver pad) is electrically connected with a corresponding connector of the load 4b (i.e., the mobile phone), the electric energy from the transmitter coil assembly 31 of the wireless charging device 3 can be received by the receiver coil assembly 41 and the receiver module 42 of the wireless receiving unit 4a. Under this circumstance, even if the mobile phone does not have the function of being wirelessly charged, the mobile phone can be wirelessly charged by the wireless charging device 3 through the wireless receiving unit 4a.

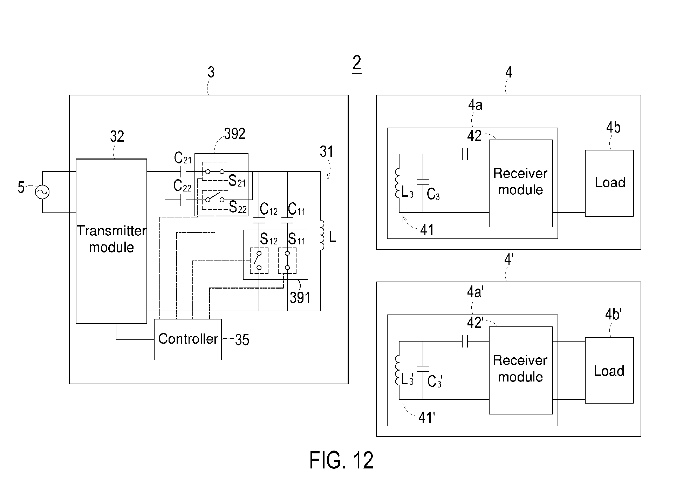

FIG. 12 is a schematic circuit block diagram illustrating the architecture of the wireless charging system according to another embodiment of the present invention. In this embodiment, the wireless charging system 2 comprise a wireless charging device 3 and two power-receiving devices 4 and 4'. The power-receiving device 4 comprises a wireless receiving unit 4a, and the power-receiving device 4' comprises a wireless receiving unit 4a'. According to the specifications and features of the wireless receiving units 4a and 4a', the wireless charging device 3 can adaptively or selectively charge the load 4b and 4b' of the power-receiving devices 4 and 4' by means of magnetic resonance or magnetic induction. In this embodiment, the wireless charging device 3 comprises a transmitter coil assembly 31, a transmitter module 32, a controlling unit 35, a first switching circuit 391, a second switching circuit 392, two first capacitors C11, C12 and two second capacitors C21, C22. The structures, functions and principles of the transmitter coil assembly 31 and the transmitter module 32 are similar to those mentioned above, and are not redundantly described herein.

The structures, functions and principles of the receiver coil assemblies 41, 41' and the receiver modules 42, 42' are similar to those mentioned above, and are not redundantly described herein. The first capacitors C11 and C12 are connected with the oscillation starting antenna (not shown) of the transmitter coil assembly 31 in parallel. Moreover, the first capacitors C11 and C12 are connected with each other in parallel so as to be inductively coupled with the receiver coil assemblies 41 and 41' of the power-receiving devices 4 and 4'. The second capacitors C21 and C22 are connected with the output terminal of the transmitter module 32 and the oscillation starting antenna (not shown) of the transmitter coil assembly 31 in series. Moreover, the second capacitors C21 and C22 are connected with each other in parallel so as to be inductively coupled with the transmitter module 32. Consequently, the second capacitors C21 and C22 can filter the signal and increase the charging performance. The first switching circuit 391 comprises two first switching elements S11 and S12. The first switching elements S11 and S12 are connected with the corresponding first capacitors C11 and C12 in series, respectively. The second switching circuit 392 comprises two second switching elements S21 and S22. The second switching elements S21 and S22 are connected with the corresponding second capacitors C21 and C22 in series, respectively. The controlling unit 35 is electrically connected with the first switching elements S11 and S12 of the first switching circuit 391 and the second switching elements S21 and S22 of the second switching circuit 392. According to a sensing signal from the wireless receiving units 4a and 4a' of the power-receiving devices 4 and 4' based on the adapted wireless charging technology, the controller 36 generates a control signal. According to the control signal, the first switching elements S11 and S12 of the first switching circuit 391 and the second switching elements S21 and S22 of the second switching circuit 392 are selectively turned on or turned off. Consequently, the wireless charging device 3 can adaptively or selectively charge the load 4b and 4b' of the power-receiving devices 4 and 4' by means of magnetic resonance or magnetic induction according to the specifications and features of the wireless receiving units 4a and 4a'.

The working frequencies of the wireless charging device 3 and the power-receiving devices 4 and 4' can be calculated according to the formula: fa = 1/[(2π)×(LaCa)^{1/2}] = 1/[(2π)×(LbCb)^{1/2}] = fb. In this formula, fa is the working frequency of the wireless charging device 3, fb is the working frequency of the power-receiving device 4 or 4', Ca is the capacitance value of the first capacitor C11 or C12, La is the inductance value of the oscillation starting antenna of the transmitter coil assembly 31, Cb is the capacitance value of the third capacitor C3 or C3' of the power-receiving device 4 or 4', and Lb is the inductance value of the oscillation starting antenna of the receiver coil assembly 41 or 41'. For example, the capacitance values of the first capacitors C11 and C12 are respectively 0.5µF and 0.1nF, and the inductance value L of the oscillation starting antenna of the transmitter coil assembly 31 is 5µH. If the capacitance value of the third capacitor C3 of the power-receiving device 4 is 0.5µF and the inductance value L3 of the oscillation starting antenna of the receiver coil assembly 41 is 5µH, the controlling unit 35 of the wireless charging device 3 issues a corresponding control signal to the first switching circuit 391 and the second switching circuit 392. According to this control signal, the first switching element S11 and the second switching element S21 are turned on, and the first switching element S12 and the second switching element S22 are turned off. Consequently, the first capacitor C11 with the capacitance value of 0.5µF is selected by the wireless charging device 3 and the inductance value of the oscillation starting antenna of the transmitter coil assembly 31 is 5µH. Under this circumstance, the working frequency of the wireless charging device 3 and the working frequency of the wireless receiving unit 4a of the power-receiving device 4 are both 100 KHz. Consequently, the wireless receiving unit 4a of the power-receiving device 4 is wirelessly charged by the wireless charging device 3 at the lower frequency according to magnetic induction. Whereas, if the capacitance value of the third capacitor C3' of the power-receiving device 4' is 0.1nF and the inductance value L3' of the oscillation starting antenna of the receiver coil assembly 41' is 5µH, the controlling unit 35 of the wireless charging device 3 issues a corresponding control signal to the first switching circuit 391 and the second switching circuit 392. According to this control signal, the first switching element S12 and the second switching element S22 are turned on, and the first switching element S11 and the second switching element S21 are turned off. Consequently, the first capacitor C12 with the capacitance value of 0.1nF is selected by the wireless charging device 3 and the inductance value of the oscillation starting antenna of the transmitter coil assembly 31 is 5µH. Under this circumstance, the working frequency of the wireless charging device 3 and the working frequency of the wireless receiving unit 4a' of the power-receiving device 4' are both 6.78MHz. Consequently, the wireless receiving unit 4a' of the power-receiving device 4' is wirelessly charged by the wireless charging device 3 at the higher frequency according to magnetic resonance. The working frequency is presented herein for purpose of illustration and description only.

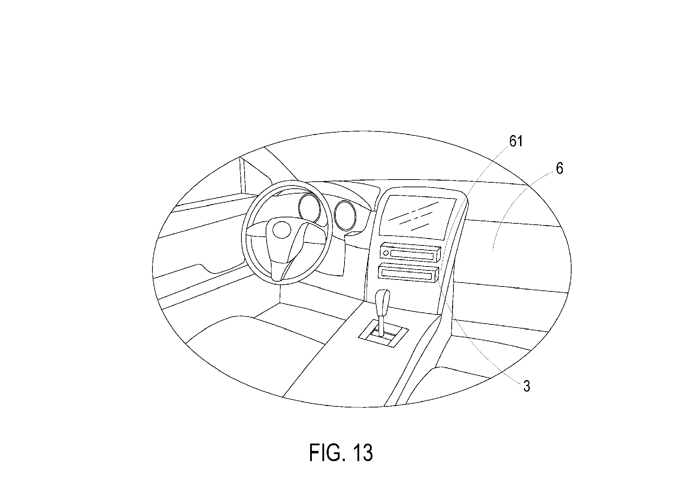

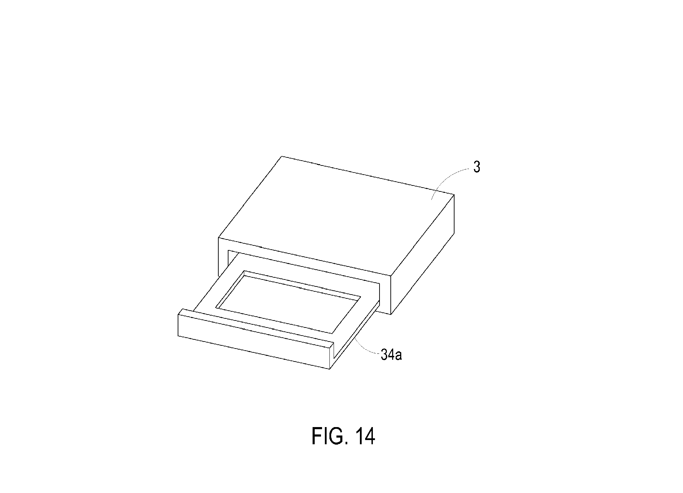

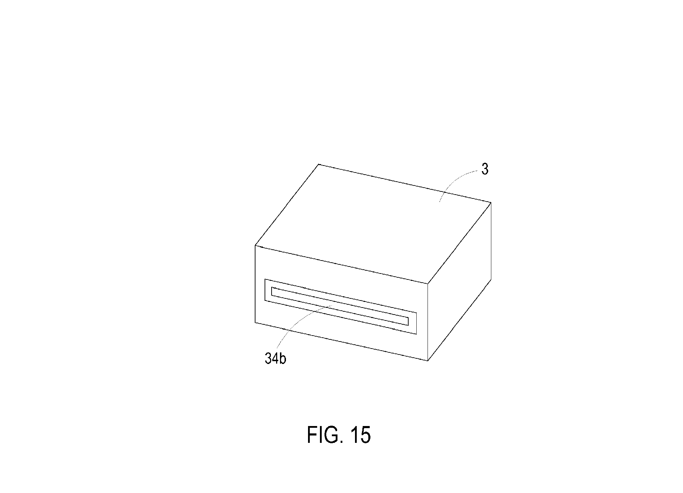

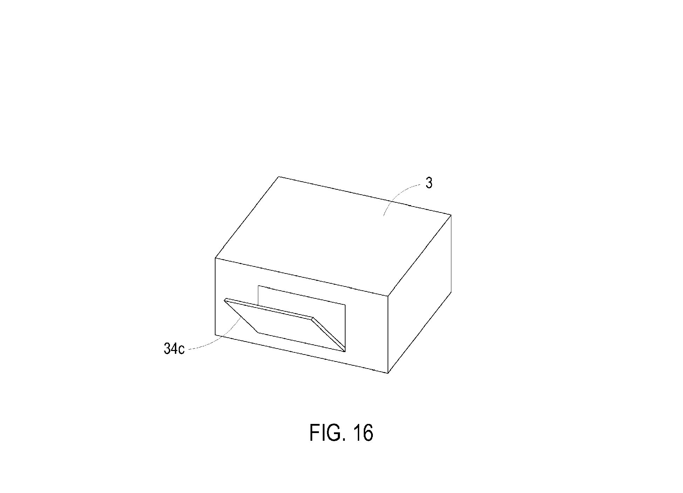

Hereinafter, some application examples of the wireless charging device of the present invention will be illustrated with reference to FIGS. 13, 14, 15 and 16. As shown in FIG. 13, the wireless charging device 3 is installed in a mounting slot 61 of a vehicle body 6 in order to wirelessly charge the power-receiving device 4. As shown in FIG. 14 and also FIG. 3, the movable carrying unit 34 of the wireless charging device 3 is a tray-type movable carrying unit 34a. After a power-receiving device 4 is supported on the tray-type movable carrying unit 34a and the tray-type movable carrying unit 34a is pushed into the entrance 302, the power-receiving device 4 is introduced into the accommodation space 301 of the main body 30 so as to be wirelessly charged. After the wireless charging task is completed, the tray-type movable carrying unit 34a is pulled out of the entrance 302. Consequently, the power-receiving device 4 is removed from the accommodation space 301 of the main body 30. As shown in FIG. 15 and also FIG. 3, the movable carrying unit 34 of the wireless charging device 3 is a suction-type movable carrying unit 34b. After a power-receiving device 4 is inserted into the entrance 302 and sucked by the suction-type movable carrying unit 34b, the power-receiving device 4 is introduced into the accommodation space 301 of the main body 30 so as to be wirelessly charged. After the wireless charging task is completed, the suction-type movable carrying unit 34b is pulled out of the entrance 302. Consequently, the power-receiving device 4 is removed from the accommodation space 301 of the main body 30. As shown in FIG. 16 and also FIG. 3, the movable carrying unit 34 of the wireless charging device 3 is a cassette-type movable carrying unit 34c. After a power-receiving device 4 is supported on the cassette-type movable carrying unit 34c and the entrance 302 is closed by the cassette-type movable carrying unit 34c, the power-receiving device 4 is introduced into the accommodation space 301 of the main body 30 so as to be wirelessly charged. After the wireless charging task is completed, the cassette-type movable carrying unit 34c is pulled out of the entrance 302. Consequently, the power-receiving device 4 is removed from the accommodation space 301 of the main body 30.

From the above descriptions, the present invention provides a wireless charging device. The wireless charging device is capable of automatically and wirelessly charging a power-receiving device when the power-receiving device is loaded into a main body of the wireless charging device. Moreover, the wireless charging device is capable of suppressing the divergence of the electromagnetic wave in order to reduce the electromagnetic radiation injury. Moreover, since the electromagnetic wave is converged to a charging zone to charge one or more power-receiving devices in a non-contact manner, the charging efficiency of the wireless charging device is enhanced. The wireless charging device of the present invention is suitably used in a vehicle body. The wireless charging device is capable of emitting an electromagnetic wave with one or more frequencies so as to wirelessly charge one or more power-receiving devices at the same time or at different times. Moreover, the wireless charging device has an accommodation space for accommodating the one or more power-receiving devices. Consequently, one or more power-receiving devices within the accommodation space can be wirelessly charged by the wireless charging device at the same time or at different times. Under this circumstance, the wireless charging application and convenience are enhanced. Moreover, the wireless charging device can adaptively or selectively charge the at least one power-receiving device according to magnetic resonance or magnetic induction.

## Claims

1. A wireless charging device (3) for wirelessly charging at least one power-receiving device (4, 4'), the wireless charging device (3) comprising:
a main body (30) comprising an accommodation space (301) and an entrance (302);
at least one transmitter coil assembly (31) disposed within the main body (30), wherein each transmitter coil assembly (31) comprises at least one antenna (312, 313) for emitting an electromagnetic wave with at least one specified frequency for wirelessly charging the at least one power-receiving device (4, 4');
at least one transmitter module (32) electrically connected with the corresponding transmitter coil assembly (31) and a power source (5), wherein the transmitter module (32) receives an electric energy from the power source (5) and provides an AC signal to the corresponding transmitter coil assembly (31);
a shielding structure (33) attached on an outer surface of the main body (30) or disposed within the main body (30), wherein the shielding structure (33) shields at least a part of the antenna (312, 313) of the transmitter coil assembly (31) so as to block divergence of the electromagnetic wave toward an outer side of the main body (30);
a movable carrying unit (34) disposed within the accommodation space (301) of the main body (30) for carrying the at least one power-receiving device (4, 4'), wherein the at least one power-receiving device (4, 4') is selectively introduced into or removed from the accommodation space (301) of the main body (30) through the movable carrying unit (34); and
a controlling unit (35) electrically connected with the at least one transmitter module (32), wherein according to a result of judging whether the at least one power-receiving device (4, 4') is introduced into or removed from the accommodation space (301) of the main body (30) through the movable carrying unit (34), the at least one transmitter module (32) is enabled or disabled by the controlling unit (35).

2. The wireless charging device (3) according to claim 1, further comprising a sensing unit (37), wherein the sensing unit (37) is electrically connected with the controlling unit (35) for detecting whether the at least one power-receiving device (4, 4') is carried by the movable carrying unit (34) and introduced into the accommodation space (301) of the main body (30).

3. The wireless charging device (3) according to any of the claims 1 to 2, wherein if the sensing unit (37) detects that the at least one power-receiving device (4, 4') is carried by the movable carrying unit (34) and introduced into the accommodation space (301) of the main body (30), a sensing signal in an enabling state is issued from the sensing unit (37) to the controlling unit (35), wherein according to the sensing signal in the enabling state, the controlling unit (35) generates a corresponding control signal to the transmitter module (32) so as to enable the transmitter module (32).

4. The wireless charging device (3) according to any of the claims 1 to 3, wherein if no power-receiving device (4, 4') is carried by the movable carrying unit (34), or if the movable carrying unit (34) is not introduced into the accommodation space (301) of the main body (30), or if the at least one power-receiving device (4, 4') carried by the movable carrying unit (34) is removed from the accommodation space (301) of the main body (30), a sensing signal in a disabling state is issued from the sensing unit (37) to the controlling unit (35), wherein according to the sensing signal in the disabling state, the controlling unit (35) generates a corresponding control signal to the transmitter module (32) so as to disable the transmitter module (32).

5. The wireless charging device (3) according to any of the claims 1 to 4, further comprising a driving unit (36), wherein the driving unit (36) is electrically connected with the controlling unit (35) and the movable carrying unit (34), and the driving unit (36) drives movement of the movable carrying unit (34) under control of the controlling unit (35).

6. The wireless charging device (3) according to any of the claims 1 to 5, wherein each transmitter coil assembly (31) comprises:
a flexible substrate (311) having a first surface (311a) and a second surface (311b), wherein the first surface (311a) and the second surface (311b) are opposed to each other;
an oscillation starting antenna (312) disposed on the first surface (311a) of the flexible substrate (311); and
a resonant antenna (313) disposed on the second surface (311b) of the flexible substrate (311), wherein the oscillation starting antenna (312) receives the AC signal, at least one capacitor (316) is connected between a first end (313a) and a second end (313b) of the resonant antenna (313), and the electromagnetic wave is emitted in response to a coupling effect of the resonant antenna (313) and the oscillation starting antenna (312).

7. The wireless charging device (3) according to any of the claims 1 to 6, wherein the transmitter coil assembly (31) further comprises:
a first protective layer (314) covering the oscillation starting antenna (312); and
a second protective layer (315) covering the resonant antenna (313),
wherein the shielding structure (33) is attached on an outer side of the first protective layer (314), or the shielding structure (33) is arranged between the first protective layer (314) and the oscillation starting antenna (312).

8. The wireless charging device (3) according to any of the claims 1 to 7, wherein the shielding structure (33) comprises a metal mesh, a magnetically-permeable film, or a combination of the metal mesh and the magnetically-permeable film.

9. The wireless charging device (3) according to claim 8, wherein the metal mesh is made of copper, gold, silver, aluminum, tungsten, chromium, titanium, indium, tin, nickel, iron, or a combination thereof, wherein the magnetically-permeable film is made of soft magnetic material, and the soft magnetic material is a mixture of ferrite or iron-silicon-aluminum alloy and adhesive material.

10. The wireless charging device (3) according to any of the claims 1 to 9, further comprising a protective layer (38), wherein the protective layer (38) covers at least a part of the shielding structure (33).

11. The wireless charging device (3) according to any of the claims 1 to 10, wherein each transmitter module (32) comprises:
a converting circuit (321) electrically connected with the power source (5) for converting the electric energy from the power source (5);
an oscillator (322) electrically connected with the converting circuit (321) for adjustably outputting the AC signal with the specified frequency;
a power amplifier (323) connected with the oscillator (322) and the converting circuit (321) for amplifying the AC signal; and
a filtering circuit (324) connected with the power amplifier (323) for filtering the AC signal and outputting the filtered AC signal to the corresponding transmitter coil assembly (31).

12. The wireless charging device (3) according to any of the claims 1 to 11, wherein the movable carrying unit (34) is a tray-type movable carrying unit (34a), a suction-type movable carrying unit (34b) or a cassette-type movable carrying unit (34c).

13. The wireless charging device (3) according to any of the claims 1 to 12, wherein the wireless charging device (3) is installed in a mounting slot (61) of a vehicle body (6).
